# EUROPÄISCHE PATENTSCHRIFT

(11) **EP 1 059 191 B1**
(45) Veröffentlichungstag und Bekanntmachung des Hinweises auf die Patenterteilung: **04.08.2004**
(21) Anmeldenummer: 00110139.3
(22) Anmeldetag: 11.05.2000
(51) Int. Cl.: B60N 2/02

(54) **Sitzverstellschalter in Form eines miniaturisierten Fahrzeugsitzes**
Seat adjusting switch in the shape of a miniaturised vehicle seat
Commutateur de réglage de siège en forme de siège de véhicule miniaturisé

(30) Priorität: 10.06.1999 DE 19926520
(43) Veröffentlichungstag der Anmeldung: 13.12.2000
(73) Patentinhaber: Volkswagen Aktiengesellschaft, 38436 Wolfsburg (DE)
(72) Erfinder: Wollenhaupt, Ralf, 38350 Helmstedt (DE); Bischoff, Klaus, 38173 Evessen (DE)

(56) Entgegenhaltungen:
- DE-A- 19 729 866
- DE-C- 3 904 771
- DE-C- 3 924 292
- DE-C- 4 331 663

## Beschreibung

Die Erfindung betrifft einen Sitzverstellschalter in Form eines stilisierten miniaturisierten Fahrzeugsitzes, wobei mehrere Elemente des Sitzverstellschalters zur Verstellung einzelner Fahrzeugsitzpartien einzeln betätigbar sind, gemäß Oberbegriff des Patentanspruches 1 (siehe z.B. die DE 19729 866 A1).

Sitzverstellschalter in dieser und ähnlicher Form sind aus dem Stand der Technik bekannt. So ist aus der DE 28 39 367 bereits ein elektrischer Sitzverstellschalter in Form eines stilisierten Sitzes mit einer Mehrzahl von Einzelschaltern bekannt. Dabei ist das stilisierte Lehnenelement eine um einen kleinen Winkelbetrag verstellbare Schalterpartie, die um eine feste Achse verschwenkbar ist. Damit läßt sich lediglich eine Neigungseinstellung der Rückenlehne des Fahrzeugsitzes vornehmen.

Aus der DE 39 33 561 C1 ist ebenfalls ein elektrischer Sitzverstellschalter in Form eines stilisierten Sitzes mit einer Mehrzahl von Einzelschaltern bekannt. Die Bedienelemente sind zum Teil mit zwei Freiheitsgraden der Bewegung und damit der Betätigung ausgestattet.

Weiterhin sind sog. Lendenwirbelstützen, auch Lordosenstützen genannt, bekannt. Sie sind im unteren Bereich der Rückenlehne angeordnet und dienen dazu, die Rückenlehne in dieser Partie mehr oder weniger auszubauchen. Dabei kann die Lordosenstütze auch in geringfügigem Maße aufwärts und abwärts bewegt werden. So ist aus der DE 195 05 447 A1 ein mechanischer integrierter Regler zur Lordosenstützeneinstellung bekannt, der aus einem Handrad und einem Drehhebel besteht. Nachteilig ist hierbei die mechanische Einstellung, die keine absolute reproduzierbare Sitzeinstellung gewährleistet. Ebenfalls ist aus der DE 93 07 689 U1 eine mechanische Lordosenstützeneinstellung bekannt, die durch ineinander angeordnete Handräder betätigbar ist.

Aus der DE 43 31 663 ist ein elektrischer Sitzverstellschalter in Form eines stilisierten Sitzes mit einer Mehrzahl von Einzelschaltern sowie einer Lordosenstützeneinstellung über Drucktasten angegeben, allerdings ohne Bedienelement, welches die notwendige Zahl von Freiheitsgraden zur Betätigung der Lordosenstützen beinhaltet.

Aus der DE 195 34 660 C1 ist ein elektrischer Sitzverstellschalter mit einer Mehrzahl von Einzelschaltern zur Einstellung der Lordosenstütze angegeben. Dabei erfolgt die Auswahl eines oder mehrerer Luftkissen im Sitz über einen Schiebeschalter und die Einstellung des Druckes des gewählten Kissens über Drucktasten. Hier wird das Betätigungsproblem ausschließlich pneumatisch gelöst.

Der geeigneten Betätigung der Lordosenstütze kommt eine besondere Bedeutung zu. Zum einen muß die Verstellbarkeit elektrisch gewährleistet sein, um die Einbindung in Memory-Sitzeinstellungen zu gewährleisten. Zum anderen muß der Lordosenverstellschalter mehrere Schaltfreiheitsgrade aufweisen, um die gewünschte Bewegbarkeit der Lordosenstütze zu gewährleisten. Außerdem muß der Lordosenverstellschalter haptisch gut erreichbar und im übrigen zur Sitzverstellung insgesamt auch selbsterklärend positioniert sein.

Der Erfindung liegt somit die Aufgabe zugrunde, einen Sitzverstellschalter der gattungsgemäßen Art dahingehend weiterzubilden, daß der Lordosenverstellschalter in den gesamten Sitzverstellschalter geeignet und funktionell, sowie haptisch gut erreichbar integriert ist.

Die gestellte Aufgabe wird bei einem Sitzverstellschalter der gattungsgemäßen Art erfindungsgemäß durch die kennzeichnenden Merkmale des Patentanspruches 1 gelöst.

Weitere vorteilhafte Ausgestaltungen des erfindungsgemäßen Sitzverstellschalters sind in den übrigen Ansprüchen angegeben.

In erfindungsgemäßer Weise ist das Verstellschaltelement zur Lordosenverstellung auf einem bzw. auf dem Rücklehnenverstell-Schaltelement des Sitzverstellschalters integriert angeordnet. Dies bedeutet, daß der Lordosenverstellschalter nicht für sich allein positioniert ist, sondern auf einem Schaltelement bzw. einer Schaltelementpartie des Sitzverstellschalters integriert angeordnet ist.

Den Lordosenverstellschalter innerhalb einer Sitzverstellschalteranordnung in Form eines miniaturisierten Fahrzeugsitzes separiert anzuordnen, wie dies in der (o.g.) DE 197 29 866 A1 vorgenommen ist, führt dazu, daß das besagte Schaltelement zwischen zwei Schaltelemente oder zwei Schaltelementpartien plaziert wird. Dadurch ergibt sich im Stand der Technik das Problem, daß die als eigenes Schaltelement separierte Plazierung eines Lordosenverstellschalters zwischen den übrigen Sitzverstellschaltelementen den gesamten Sitzverstellschalter entweder zu groß ausfallen läßt oder aber die einzelnen Schaltelemente sind so klein, daß sie in ihrer Betätigung nicht mehr handhabbar sind.

Demgegenüber löst die Erfindung genau dieses Problem dadurch, daß der Lordosenverstellschalter auf einem Schaltelement des Sitzverstellschalters, beispielsweise dem Rückenlehnenverstellschalter angeordnet ist. Durch diese integrative Anordnung des Lordosenverstellschalters auf einem übrigen Verstellschaltelement ist die Möglichkeit gegeben, daß das Schaltelement als Ganzes weiterhin zur Verstellung der Rückenlehne dient, aber der auf dem Schalter oder diesem Schaltelement angeordnete Lordosenverstellschalter von den übrigen Schaltelementen auch separat betätigt werden kann. Somit benötigt der Lordosenverstellschalter auf dem ohnehin schon miniaturisierten Sitzverstellschalter keinen zusätzlichen Platz. Lediglich muß gewährleistet sein, daß auch die beiden Schaltfunktionen des Rückenlehnenverstellschaltelementes sowie des Lordosenverstellschalters diese Integration zulassen. Das wird dadurch erreicht, daß der Lordosenverstellschalter auf einem Stiftelement von dem übrigen Schaltelement erhaben angeordnet ist und der Lordosenverstellschalter somit als Joystickschalter mit insgesamt vier Schaltpositionen realisiert ist.

Die beiden sich ergebenden Schaltwege, sowohl in einer Hin- als auch einer Rückführposition sind dabei weitestgehend orthogonal zueinander liegend, so daß die Schalterbetätigung im wesentlichen als eine Abbildung der erzielbaren orthogonalen Verfahrwege der Lordosenstütze nach oben und nach unten sowie nach vorne und nach hinten realisiert ist.

Wie gesagt, ist das Rückenlehnenschaltelement zum Lordosenverstellschalter unabhängig betätigbar. Dabei weist der Rückenlehnenverstellschalter eine Aussparung auf, die so groß gewählt ist, daß zum einen der Betätigungskopf des Lordosenverstellschalters teilweise in dieser Aussparung versenkt ist und der ihn umgebende Luftspalt zwischen dem besagten Lordosenverstellschalterknopf und der besagten Ausnehmung so groß ist, daß die Neigungsbetätigungen des Lordosenverstellschalters innerhalb dieser Luftspalte auch möglich sind.

In weiterer vorteilhafter Ausgestaltung ist der gesamte Sitzverstellschalter aus einzelnen Schalterbausteinen aufgebaut. Jeder Schalterbaustein ist damit einem jeweils einzeln betätigbaren Schaltelement des Fahrzeugsitzes zugeordnet. Dabei ist jeder Sitzpartie, wozu Rückenlehne und Sitzfläche gehören, jeweils mindestens zwei, besser jedoch drei Verstellschalter zugeordnet.

Insgesamt ergibt sich eine bessere Integration der einzelnen Schaltelemente unter Beibehaltung des an sich vorteilhaften miniaturisierten und einen Fahrzeugsitz darstellenden Sitzverstellschalters. Außerdem ist eine gute logische Funktionszuweisung auch durch die integrative Anordnung des Lordosenverstellschalters auf dem Rückenlehnenverstellelement gegeben, da auch dort in realiter die Lordosenstütze im Fahrzeugsitz plaziert ist.

Insgesamt ergibt sich durch die Aufbauweise des Lordosenverstellschalters auch eine gute Haptik, und die einzelnen Sitzelemente lassen sich auch gut separat voneinander betätigen. Obwohl der Lordosenverstellschalter auf dem Rückenlehnenverstellschalter angeordnet ist, ist eine versehentliche Doppelbetätigung von Rückenlehnenverstellschalter und Lordosenverstellschalter durch die spezifischen Schalterkonstruktionen ausgeschlossen.

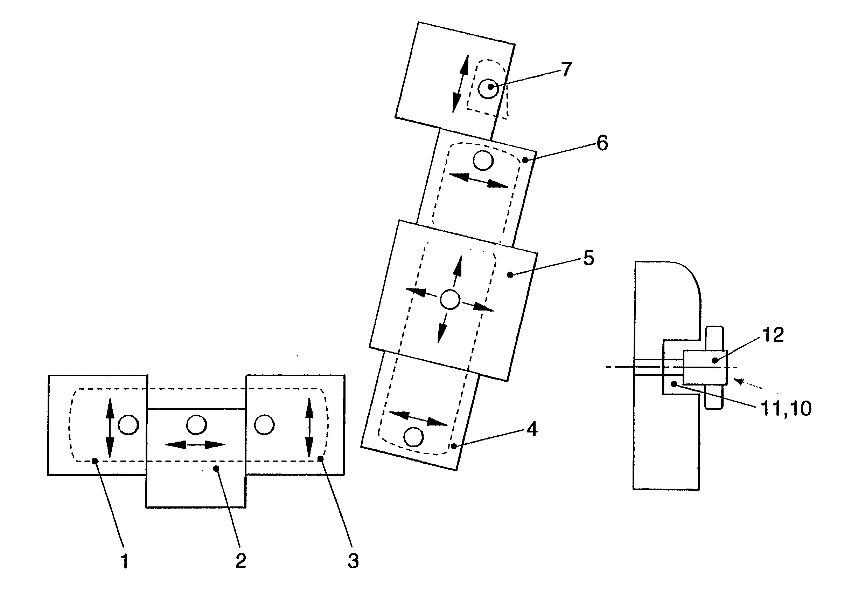

Die Erfindung ist in der Zeichnung dargestellt und nachfolgend näher beschrieben.

Die Abbildung zeigt einen stilisierten Sitzverstellschalter, welcher aus einzelnen Schalterbausteinen aufgebaut ist. Dem Sitzflächenelement sind drei einzelne Verstellschalterbausteine 1 ,2, 3 zugeordnet. Der vordere Verstellschalter 1 dient der Aufund Abwärtsbewegung der vorderen Partie der Sitzfläche, welche den Insassen in der Unterstützung der Oberschenkelpartie, nahe dem Kniegelenk, unterstützt. Der hintere Verstellschalter 3 ist ebenfalls auf- und abwärts bewegbar, so daß sich eine Auf- und Abwärtsbewegung des eigentlichen Fahrzeugsitzes oder der wesentlichen Sitzfläche ergibt. Das mittlere Verstellschalter 2 übernimmt durch Verschieben des gesamten Sitzflächenschalters nach vorne und hinten die Verstellung bzw. Verfahrung des Fahrzeugsitzes nach vorne oder nach hinten.

Es sei hier noch einmal deutlich gemacht, daß in der Abbildung lediglich die Schalter dargestellt werden, hinter denen Mikroschaltelemente verborgen sind. Entsprechende Griffelemente, die dann vom Bediener ergriffen und im übrigen auch die tatsächliche stilisierte Sitzkontur aufweisen, sind in dieser Darstellung nicht zu sehen, da sie die einzelnen Schalterelemente verdecken würden.

Für den Rückenlehnenbereich sind folgende Funktionen vorgesehen. Zum einen soll eine gesamte Lehnenverstellung durch Anlenkung einer Bewegung auf den unteren Verstellschalter 4 gegeben werden, der in Pfeilrichtung durch eine Verschwenkbewegung betätigbar ist. Ebenfalls vorgesehen ist die separate Verstellung des Lehnenkopfes durch den Lehnenkopfverstellschalter 6. Das bedeutet, daß nicht nur die Neigung der Rückenlehne einstellbar sein soll, sondern davon separat auch der Lehnenkopf unabhängig bewegbar sein soll. Damit ergibt sich eine Einstellung im Hinblick auf eine ergonomische Sitzschale, die mehr oder weniger konkav, je nach Einstellung der Lehnenkopfpartie möglich ist. Davon unabhängig ist natürlich ein weiterer Verstellschalter 7 für die Kopfstütze gegeben. Diese läßt sich dann im übrigen auch unabhängig vom übrigen Rückenlehnenelement verstellen. Die mittlere Partie in dieser Schalteranordnung enthält den Rückenlehnenverstellschalter 5 welcher integrativ den Lordosenverstellschalter 10 enthält. Hierzu ist ein Schaltelementbaustein gewählt, der die vier voneinander unabhängigen Bewegungen vor und zurück, sowie aufwärts und abwärts ermöglicht. Diese Schaltpositionen werden durch einen sog. Joystickschalter gegeben, mit welchem die einzelnen Bewegungen ausgeführt bzw. ausgelöst werden können.

Wichtig ist in allen Fällen, daß der Lordosenverstellschalter 10 nicht zwischen zwei Verstellschaltern oder Schaltkörpem angeordnet ist, wobei er zusätzlichen Platz bedürfte. Dieser zusätzliche Platzbedarf wäre natürlich durch geeignete Miniaturisierung erreichbar, jedoch würde dies zu einer schlechten Haptik führen, da die einzelnen Schaltelemente ohnehin nicht zu groß ausfallen dürfen.

Der besagte Verstellschalter 5 weist zur integrativen Aufnahme auch des Lordosenverstellschalters 10 , wie in einer Teilschnittdarstellung gezeigt ist, eine Ausnehmung 11 auf, in welcher der Knopf 12 des Lordosenverstellschalters 10 Platz findet. Zwischen den Außenkonturen des Knopfes 12 des Lordosenverstellschalters 10 und der Ausnehmung 11 selbst, ergibt sich ein Luftspalt, der so bemessen ist, daß die einzelnen Schaltwege des Lordosenverstellschalters innerhalb dieser Ausnehmung auch durch Kippbetätigung möglich sind.

Wie gesagt, sind die einzelnen Verstellschalter bzw. Verstellschaltkörper mit entsprechenden Griffkörpem abgedeckt, die in ihrer Gesamtheit auch die Sitzkontur darstellen. Dabei müssen die Griffelemente entsprechend gelagert sein, um beispielsweise für das Sitzelement eine getrennte Bewegung auf- und abwärts im vorderen Bereich, aber auch im hinteren Bereich und unabhängig voneinander zu gewährleisten, und die insgesamte Bewegung des Knopfes oder Griffelementes eine insgesamtige Verstellung des Sitzflächenelementes auch nach vorne und hinten zuläßt.

Beim Rückenlehnenverstellschalter in dieser Art, bedarf es einer gegliederten unterteilten Anordnung, bei der zwei oder mehrere Elemente unabhängig voneinander betätigbar sind. Insgesamt muß eine Verschwenkbewegung des gesamten Rückenlehnenschaltelementes zu einer gesamten Lehnenneigungsverstellung möglich sein, der Lordosenverstellschalter muß davon unabhängig betätigbar sein, sowie auch die Lehnenkopfverstellung eine separate Verschwenkbewegung zulassen muß. Ebenso separiert davon ist die besagte Grifffläche für die Verstellung der Kopfstütze.

## Patentansprüche

1. Sitzverstellschalter in Form eines miniaturisierten Fahrzeugsitzes, wobei mehrere Elemente des Sitzverstellschalters zur Verstellung einzelner Fahrzeugsitzpartien einzeln betätigbar sind,
**dadurch gekennzeichnet,**
**daß** der Verstellschalter (10) zur Lordosenstützenverstellung auf einem bzw. auf dem Rückenlehnenverstellschalter (5) des Sitzverstellschalters integriert angeordnet ist.

2. Sitzverstellschalter nach Anspruch 1,
**dadurch gekennzeichnet,**
**daß** der Lordosenverstellschalter (10) mit mindestens zwei, weitestgehend orthogonal zueinander liegenden Freiheitsgraden versehen ist, die entsprechend der notwendigen Verstellbarkeit der Lordosenstütze nach vorne und hinten und aufwärts und abwärts bewegen.

3. Sitzverstellschalter nach Anspruch 1 oder zwei,
**dadurch gekennzeichnet,**
**daß** der Rückenlehnenverstellschalter (5) zum Lordosenverstellschalter (10) mechanisch unabhängig betätigbar ist.

4. Sitzverstellschalter nach Anspruch 3,
**dadurch gekennzeichnet,**
**daß** das Griffelement des Rückenlehnenverstellschalters (5) eine Ausnehmung (11) oder Eintiefung aufweist, in der der Betätigungsknopf (12) des Lordosenverstellschalters (10) plaziert ist.

5. Sitzverstellschalter nach Anspruch 4,
**dadurch gekennzeichnet,**
**daß** die besagte Ausnehmung (11) zur Außenumfangslinie des Betätigungsknopfes (12) der Lordosenstütze so bemessen ist, daß innerhalb dieser Ausnehmung (11) der Betätigungsknopf des Lordosenverstellschalters in alle Betätigungsrichtungen betätigbar ist.

6. Sitzverstellschalter nach einem der vorhergehenden Ansprüche,
**dadurch gekennzeichnet,**
**daß** für die Lehnenkopfverstellung ein separater Verstellschalter (7) vorgesehen ist.

7. Sitzverstellschalter nach einem der vorhergehenden Ansprüche,
**dadurch gekennzeichnet,**
**daß** die einzelnen Verstellschalter (1,2,3,4,5,6,7,10) Schalterbausteine sind, die zusammenfügbar den aus Einzelelementen aufgebauten gesamten Sitzverstellschalter ergeben.

8. Sitzverstellschalter nach einem der vorhergehenden Ansprüche,
**dadurch gekennzeichnet,**
**daß** die einzelnen Verstellschalter (1,2,3,4,5,6,7,10) von Griffelementen in entsprechender Weise und entsprechender Betätigbarkeit abgedeckt sind.

## Claims

1. Seat-adjusting switch in the form of a miniaturized vehicle seat, it being possible for a plurality of elements of the seat-adjusting switch to be actuated individually in order to adjust individual parts of the vehicle seat, **characterized in that** the adjusting switch (10) for adjustment of the lordosis support is integrated on a or on the backrest-adjusting switch (5) of the seat-adjusting switch.

2. Seat-adjusting switch according to Claim 1, **characterized in that** the lordosis-adjusting switch (10) is provided with at least two degrees of freedom which lie to the greatest possible extent orthogonally with respect to each other and move forwards and rearwards and upwards and downwards in accordance with the necessary adjustability of the lordosis support.

3. Seat-adjusting switch according to Claim 1 or 2, **characterized in that** the backrest-adjusting switch (5) can be actuated mechanically independently from the lordosis-adjusting switch (10).

4. Seat-adjusting switch according to Claim 3, **characterized in that** the gripping element of the backrest-adjusting switch (5) has a recess (11) or cavity in which the actuating knob (12) of the lordosis-adjusting switch (10) is placed.

5. Seat-adjusting switch according to Claim 4, **characterized in that** the said recess (11) is dimensioned with respect to the outer circumferential line of the actuating knob (12) of the lordosis support in such a manner that the actuating knob of the lordosis-adjusting switch can be actuated in all directions of actuation within this recess (11).

6. Seat-adjusting switch according to one of the preceding claims, **characterized in that** a separate adjusting switch (7) is provided for the adjustment of the top of the backrest.

7. Seat-adjusting switch according to one of the preceding claims, **characterized in that** the individual adjusting switches (1, 2, 3, 4, 5, 6, 7, 10) are switch components which can be joined together to produce the overall seat-adjusting switch constructed from individual elements.

8. Seat-adjusting switch according to one of the preceding claims, **characterized in that** the individual adjusting switches (1, 2, 3, 4, 5, 6, 7, 10) are covered by gripping elements in a corresponding manner and with corresponding capability of being actuated.

## Revendications

1. Commutateur de réglage de siège en forme de siège de véhicule miniaturisé, plusieurs éléments du commutateur de réglage de siège servant à régler les différentes parties du siège du véhicule étant actionnables individuellement,
**caractérisé en ce que**
le commutateur de réglage (10) pour le réglage de l'appui de lordose est disposé de façon intégrée sur un ou sur le commutateur de réglage de dossier (5) du commutateur de réglage de siège.

2. Commutateur de réglage de siège selon la revendication 1,
**caractérisé en ce que**
le commutateur de réglage de lordose (10) comporte au moins deux degrés de liberté situés autant que possible orthogonalement l'un par rapport à l'autre, qui bougent vers l'avant et l'arrière et vers le haut et le bas en fonction de la capacité de réglage nécessaire de l'appui de lordose.

3. Commutateur de réglage de siège selon la revendication 1 ou 2,
**caractérisé en ce que**
le commutateur de réglage de dossier (5) est actionnable mécaniquement indépendamment du commutateur de réglage de lordose (10).

4. Commutateur de réglage de siège selon la revendication 3,
**caractérisé en ce que**
l'élément de préhension du commutateur de réglage de dossier (5) présente un évidement (11) ou un renfoncement dans lequel est placé le bouton d'actionnement (12) du commutateur de réglage de lordose (10).

5. Commutateur de réglage de siège selon la revendication 4,
**caractérisé en ce que**
ledit évidement (11) est dimensionné par rapport à la ligne circonférentielle extérieure du bouton d'actionnement (12) de l'appui de lordose de manière à ce qu'à l'intérieur de cet évidement (11), le bouton d'actionnement du commutateur de réglage de lordose soit actionnable dans tous les sens d'actionnement.

6. Commutateur de réglage de siège selon l'une quelconque des revendications précédentes,
**caractérisé en ce**
**qu'**il est prévu un commutateur de réglage séparé (7) pour le réglage de la tête de dossier.

7. Commutateur de réglage de siège selon l'une quelconque des revendications précédentes,
**caractérisé en ce que**
les différents commutateurs de réglage (1, 2, 3, 4, 5, 6, 7, 10) sont des composantes de commutateur qui, étant assemblables, donnent l'ensemble du commutateur de réglage de siège composé d'éléments individuels.

8. Commutateur de réglage de siège selon l'une quelconque des revendications précédentes,
**caractérisé en ce que**
les différents commutateurs de réglage (1, 2, 3, 4, 5, 6, 7, 10) sont recouverts d'une manière correspondante et avec une possibilité d'actionnement correspondante par des éléments de préhension.
